# EUROPEAN PATENT APPLICATION

(11) **EP 1 958 519 A1**
(43) Date of publication of application: **20.08.2008**
(21) Application number: 06833464.8
(22) Date of filing: 28.11.2006
(51) Int. Cl.: A23L 1/10

(54) **RICE QUALITY-IMPROVING AGENT**

(30) Priority: 07.12.2005 JP 2005352915
(71) Applicant: Ajinomoto Co., Inc., Tokyo 104-8315 (JP)
(72) Inventor: YAMAMOTO, Tatuya, Oura-gun Gunma 370-0523 (JP); SANO, Fumihiko, Oura-gun Gunma 370-0523 (JP); MIZUNO, Hiroshi, Oura-gun Gunma 370-0523 (JP)
(74) Representative: Ilgart, Jean-Christophe
(86) International application number: PCT/JP2006/323660
(87) International publication number: WO 2007/066535

(57) **Abstract**

The present invention provides an improving agent for cooked rice, which can provide a frozen cooked rice having similar quality not only in mouthfeel and appearance but also in taste and smell to the ordinary cooked rice when the frozen cooked rice is thawed and heated by microwave heating. The improving agent for cooked rice is prepared by pulverizing a nonglutinous rice to obtain a rice powder which retains the cellular structure of each cell in the nonglutinous rice, which cell structure retains the cell wall,; mixing the obtained rice powder with water to a rice powder content of 1 to 10 wt% in water; and heating the obtained mixture such that a degree of gelatinization thereof becomes not less than 85%, preferably not less than 90%. The rice powder having a mesh size of between 100 and 300 mesh is used as the above-mentioned rice powder, and the viscosity of the improving agent is adjusted to not more than 1/3 of the maximum value of the viscosity which is observed when the rice powder-water mixture is heated continuously measuring the viscosity of the mixture with time.

## Description

### Technical Field

The present invention relates to an improving agent for cooked rice, more particularly, an agent for improving mouthfeel and/or flavor of cooked rice food products which are frozen and heated a in microwave oven when eating.

### Background Art

When the frozen cooked rice is produced, grains of cooked rice are frozen while keeping the grains unaggregated such that the cooked rice does not aggregate when the frozen rice is heated in a microwave oven. According to the conventional methods, rice to be frozen are cooked with an oil, emulsifier, soybean polysaccharide or the like; or in order to freeze cooked rice under the condition in which the grains are kept unaggregated effectively, rice just after cooking are cooled to a prescribed temperature or less and a prescribed amount of water is added thereto, followed by freezing the rice while loosening the rice with a paddle (see, e.g. Patent Literature 1).
Patent Literature 1: JP H05-68492 A

### Disclosure of the Invention

### Problems to be Solved by the Invention

However, the frozen cooked rices produced by the above-mentioned method have a problem in that their mouthfeel is insufficient in stickiness and their appearance is unsatisfactory in gloss and fluffiness. Further, there is another problem in that the taste and smell have altered in cases where the oil, emulsifier, soybean polysaccharide or the like is added.

Accordingly, an object of the present invention is to provide an improving agent for cooked rice, which can provide a frozen cooked rice having similar quality not only in mouthfeel and appearance but also taste and smell to the ordinary cooked rice when the frozen cooked rice is thawed and heated by microwave heating.

### Means for Solving the Problems

To attain the above-described object, an improving agent for cooked rice according to the present invention is prepared by pulverizing a nonglutinous rice to obtain a rice powder, not less than 50 wt% of the rice powder based on the rice powder retaining cellular structure of each cell of the nonglutinous rice; mixing the obtained rice powder with water to a rice powder content of 1 to 10 wt% in water; and heating the obtained mixture such that a degree of gelatinization thereof becomes not less than 85%.

Further, in an improving agent for cooked rice according to the present invention, it is preferred that at least 40 wt% of the above-mentioned rice powder have a mesh size of between 100 and 300 mesh. It is also preferred that the agent have a viscosity of not more than 1/3 of the maximum value of the viscosity which is observed when the mixture of water and the rice powder is heated continuously and a viscosity of the mixture is measured with time. Still further, it is preferred that not less than 50% of rice starch contained in the improving agent retain structure of each starch granule and exist in the form in which a plurality of the granules are connected to each other.

The present invention includes, as the cooked rice to which the above-described improving agent is applied, cooked rice food products to which the above-described improving agent is added in an amount of at least 2 wt% based on the cooked rice, and at least a part of the surface of the cooked rice is covered with the improving agent; especially, the cooked rice food products wherein the cooked rice is a frozen food, chilled food, retort pouch food or aseptically packaged cooked rice, as well as those wherein the cooked rice is a plain white rice, unpolished rice, cooked rice with cereal grains (kokumotsu-han), rice cooked with ingredients (takikomi-gohan), cooked rice mixed with ingredients (maze-gohan), rice gruel, rice flavored with tea and/or seasonings (cha-meshi), sushi, or rice ball.

### Effects of the Invention

By adding the improving agent for cooked rice of the present invention to cooked rice to cover a part or the entire surface of the cooked rice with the improving agent, and then freezing the covered rice while keeping the grains of the rice unaggregated to produce the frozen cooked rice, the cooked rice obtained by heating the thus produced frozen cooked rice in microwave oven comes to have a surface condition in appearance as well as stickiness and flavor similar to that the ordinary cooked rice has, compared to the conventional frozen cooked rice. Even in cases where the frozen cooked rice to which the improving agent of the present invention was applied is thawed and stored in a closed container under refrigeration or at room temperature, the alteration of mouthfeel is suppressed and the shelf life may be improved.

### Best Mode for Carrying out the Invention

In the improving agent of the present invention, a rice powder which is prepared by pulverizing a nonglutinous rice such that not less than 50 wt% of the rice powder based on the rice powder retains cellular structure of each cell of the nonglutinous rice is used as a raw material. Various rice powders may be used as long as the rice powder has the above-described state, and representative examples of the rice powder include the fine grained rice powder described in JP 7-100002 B2, and the rice powder produced by a method for producing rice powder described in JP 4-73979 B2.

Next, in the present invention, the rice powder is mixed with water to a rice powder content of 1 to 10 wt%, preferably 1.5 to 5 wt% in water. In cases where the amount of rice powder to be mixed is too small, the improving effect of the agent may not be obtained sufficiently. In cases where the amount of rice powder to be mixed is too large, mouthfeel and taste become worse, which is not preferred.

Thereafter, the rice powder-water mixture obtained by mixing a prescribed amount of the rice powder with water is heated to be gelatinized, thereby obtaining the improving agent for cooked rice of the present invention. The degree of gelatinization is not less than 85%, preferably not less than 90%. The degree of gelatinization may be adjusted by controlling the temperature and the time of heating the rice powder-water mixture. For example, in case of a mixture containing rice powder in an amount of 3 wt%, the degree of gelatinization may become about 85% by heating it at 80°C, and the degree of gelatinization may become 90% or more by heating it for 5 minutes at 90°C. It is preferred that the rice powder-water mixture be mixed thoroughly by stirring at room temperature and thereafter heated with gentle stirring.

A frozen cooked rice, produced by adding the improving agent which is prepared by using a rice powder having a mesh size of between 100 and 300 mesh to cooked rice and freezing it, has an improved stickiness and better taste when the frozen cooked rice is thawed by microwave heating. The content of the rice powder having a size of between 100 and 300 mesh in the rice powder is preferably as high as possible, and it is desirable that the rice powder having the above-described mesh size be contained in an amount of not less than 40 wt% in the rice powder used.

In addition, it is preferred that the viscosity of the improving agent according to the present invention be adjusted to not more than 1/3 of the maximum value of the viscosity (hereinafter referred to as "maximum viscosity") which is observed when the above-described rice powder-water mixture is heated continuously and a viscosity of the mixture is measured with time. If the viscosity of the agent is adjusted to higher, the mouthfeel and flavor become worse. The viscosity of the rice powder-water mixture gradually increases after a short time from the start of the heating, and reaches the maximum viscosity, thereafter decreases gradually. Although the state of the change in the viscosity on heating varies depending on the temperature and/or the time of heating the rice powder-water mixture, the value of the maximum viscosity is almost constant if the concentration of starch in the rice powder-water mixture is the same. For example, in case of the rice powder-water mixture containing 5.7 wt% rice powder, the maximum viscosity is about 250 to 320 cP when measured by Rapid Visco Analyzer.

When the improving agent with high viscosity is added to cooked rice, it is difficult to mix such an agent with the cooked rice homogeneously and to heat the mixture of rice and such an agent uniformly. Therefore, the improving agent with high viscosity is not preferred from this point too. Hence, it is desirable that the viscosity of the improving agent for cooked rice be adjusted to not more than 1/3 of the maximum viscosity, and to as low as possible, i.e., not more than 100 cp, particularly not more than 60 cP.

Further, as the state of starch in the improving agent, it is preferred that each starch granule does not exist separately, and that not less than 50% of the starch therein retain the structure of the starch granule without being disintegrated and a plurality of the starch granules are connected to botryoidally. Such an state of the starch granules may be confirmed by observing the improving agent with a microscope.

By adding the thus-prepared improving agent to cooked rice in an amount of not less than 2 wt%, preferably 10 to 15 wt% based on the cooked rice, to cover (coat) at least a part or the entire surface of the cooked rice with the improving agent, appearance, smell, mouthfeel and/or taste of the cooked rice, especially cooked rice obtained by thawing the frozen cooked rice by microwave heating, can be improved. If too small amount of the improving agent is added, the effect of adding the improving agent cannot be obtained sufficiently. If too large amount of the improving agent is added, mouthfeel and taste of the cooked rice become worse in some cases.

Particularly, the improving agent according to the present invention is suited for applying to the cooked rice to be subjected to the preservation treatment such as freezing treatment, aseptic processing or the like which is conducted after rice cooking, for example, to the cooked rice such as a frozen food, chilled food, retort pouch food or an aseptically packaged cooked rice, rather than applying to the cooked rice to be eaten immediately after rice cooking. That is, by adding the improving agent to cooked rice and mixing them to cover at least a part of the surface of the cooked rice with the improving agent, and then subjecting it to the preservation treatment such as freezing treatment, aseptic processing or the like to produce a frozen food, chilled food, retort pouch food or an aseptically packaged cooked rice, appearance, smell, mouthfeel and/or taste of the cooked rice obtained by heating them can be improved to the same or similar extent as the cooked rice immediately after cooking.

Further, the improving agent for cooked rice according to the present invention may be applied to not only the ordinary plain white rice but also various food products comprising cooked rice such as, for example, unpolished rice, cooked rice with cereal grains (kokumotsu-han), rice cooked with ingredients (takikomi-gohan), cooked rice mixed with ingredients (maze-gohan), rice gruel, rice flavored with tea and/or seasonings (cha-meshi), sushi, and rice ball. Such food products may be improved in quality by using the improving agent in the same manner as described above.

When the improving agent is added to and mixed with the frozen cooked rice to be frozen while keeping the grains of cooked rice unaggregated, the addition and mixing may be carried out efficiently and surely by freezing the cooked rice while keeping the grains unaggregated in accordance with a usual method, and thereafter spraying the rice with the improving agent and freezing it again by cooling it to a prescribed temperature.

If the improving agent is mixed preliminarily with one or more of various sugars, sugar alcohols, salts, amino acids and/or the like such that the improving agent is hardly frozen, the improving agent may become more dispersible and therefore may be mixed with the cooked rice more uniformly. This method is very effective in cases where the mixing of the improving agent becomes difficult, that is, for example, in case where a small amount of the improving agent is added to the rice powder or where the concentration of the rice powder is high. Examples of the sugar which may be used include trehalose and dextrin, and examples of the sugar alcohol which may be used include glycerin, sorbitol and the like, although the category and the type thereof are not restricted as long as the freezing temperature of the improving agent shifts down by the addition.

Depending on the type of the cooked rice food products described above, various liquid type seasonings such as soup stock (dashi), soy sauce, rice wine (sake), sweet cooking rice wine (mirin), vinegar, spices and the like, and various powder type seasonings such as salt, sugar, pepper and the like may appropriately be added together with the above-described improving agent. For example, in case of takikomi-gohan, soy sauce, dashi, mirin, salt and the like are added, and in case of cooked rice for sushi, vinegar, sugar, mirin, dashi and the like are added.

### Brief Description of the Drawings

Fig. 1 shows the procedure for producing a frozen cooked rice by using the improving agent of the present invention.
Fig. 2 shows the conventional procedure for producing a frozen cooked rice.
Fig. 3 shows the process of ordinary rice cooking.
Fig. 4 shows the relationship between the heating time and the viscosity.

### Example 1

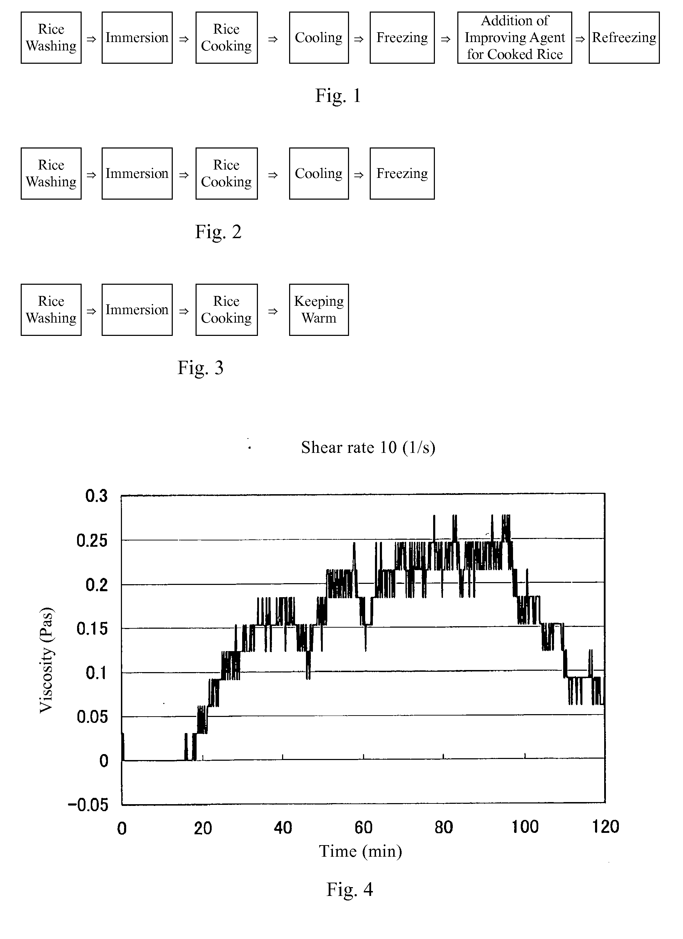

First, 3 g of the rice powder (Rice Powder CK: produced by Niigata Seifun) was mixed with 97 cc of water. The resulting mixture was heated to 90°C in a beaker immersed in boiling water with gentle stirring, and kept at 90°C for 10 minutes, thereby preparing the improving agent for cooked rice. By using this improving agent, a frozen cooked rice was produced in accordance with the process for freezing while keeping the grains of cooked rice unaggregated (inadhesive) as shown in Fig. 1. For comparison, a frozen cooked rice which was frozen while keeping the grains of cooked rice unaggregated by the conventional process shown in Fig. 2, and a cooked rice which was cooked by the ordinary rice cooking process shown in Fig. 3, were prepared.

As shown in Figs. 1 and 2, both of the above-described frozen cooked rices were produced in the same manner until the step of freezing, that is, produced by washing raw rice and immersing the washed rice into water by an usual operation; adding 130 g of water and 3 g of emulsified oil based on 100 g of the original rice and cooking the resultant; cooling the cooked rice to room temperature; and freezing the cooked rice while keeping the grains of the rice unaggregated. The frozen cooked rice obtained in this freezing step was stored and used as the conventional frozen cooked rice. The other frozen cooked rice to which the improving agent was applied was obtained by subjecting the frozen rice obtained in the above-described freezing step to additional steps. That is, 13 parts by weight (about 11.5 wt%) of the improving agent was added to 100 parts by weight of the frozen rice obtained in the above-described freezing step, and thereafter the rice was quickly refrozen while keeping the grains of the rice unaggregated and stored, thereby obtaining the other frozen cooked rice. In the ordinary rice cooking process shown in Fig. 3, water was added to raw rice at a ratio of 130 g of water based on 100 g of raw rice, and the rice was cooked, followed by keeping the cooked rice warm.

For the evaluation, 200 g of each frozen cooked rice described above was taken on a dish covered with wrap and was heated in a microwave oven at 600 W for about 4 minutes, and the obtained heated rices were used. The cooked rice which was prepared by the ordinary rice cooking process and stored under keeping warm (control), the conventional frozen cooked rice (A) and the frozen cooked rice to which the improving agent was added (B) were compared and evaluated. The results are shown in Table 1.

**Table 1**

| | Appearance Color, Gloss | Smell | Mouthfeel | | Taste | Total Evaluation |
|---|---|---|---|---|---|---|
| | | | Surface | Inside | | |
| Control | 5 | 5 | 5 | 5 | 5 | 5 |
| A | 4 | 3 | 3 | 3 | 3 | 3 |
| B | 4.5 | 4.5 | 5 | 4.5 | 5 | 4.8 |

As is apparent from these results, the frozen cooked rice (B) obtained by adding and mixing the improving agent of the present invention and freezing it while keeping the grains of the rice unaggregated, had a quality very similar to the rice cooked by the ordinary process in which only raw rice and water were used, when the frozen rice (B) was thawed and heated by microwave, compared to the conventional frozen cooked rice (A).

### Example 2

The relationship between the amount of the improving agent to be added and the condition of the cooked rice after heating was investigated by altering the amount of the improving agent to be added, which agent was prepared in the same manner as in Example 1. As shown in Table 2, the improving agent was added to the frozen cooked rice obtained by the conventional freezing process ((A) described in Example 1) at a ratio of 1 to 20 parts by weight based on the 100 parts by weight of the frozen cooked rice (A), respectively, in test groups referred to as Test Groups 1 to 10.

**Table 2**

| Test Group | 1 | 2 | 3 | 4 | 5 | 6 | 7 | 8 | 9 | 10 |
|---|---|---|---|---|---|---|---|---|---|---|
| Frozen Cooked Rice A | 100 | → | → | → | → | → | → | → | → | → |
| Improving Agent | 1 | 2 | 5 | 8 | 10 | 12 | 13 | 15 | 17 | 20 |

The condition of each cooked rice after microwave heating was evaluated in the same manner as in Example 1. The results are shown in Table 3.

**Table 3**

| N=6 | | | | | | |
|---|---|---|---|---|---|---|
| Test Group | Appearance | Smell | Mouthfeel | | Taste | Total Evaluation |
| | | | Surface | Inside | | |
| 1 | 3 | 3 | 3 | 4 | 3 | 3 |
| 2 | 3.5 | 3 | 3 | 4 | 3 | 3.3 |
| 3 | 4 | 3 | 3 | 4 | 3 | 3.5 |
| 4 | 4 | 3.5 | 3.5 | 4 | 3.5 | 3.8 |
| 5 | 4.5 | 4 | 4 | 4 | 4 | 4.3 |
| 6 | 4.5 | 4.5 | 4.5 | 4.5 | 4.5 | 4.7 |
| 7 | 4.5 | 4.5 | 5 | 4.5 | 5 | 4.8 |
| 8 | 4.5 | 4.5 | 4.5 | 4.5 | 4.5 | 4.7 |
| 9 | 4.5 | 4.5 | 4 | 4.5 | 4 | 4 |
| 10 | 4.5 | 4.5 | 3 | 4 | 3.5 | 3.8 |

These results indicate that the amount of the improving agent to be added to 100 parts by weight of cooked rice is preferably between 2 to 20 parts by weight, especially preferably 10 to 15 parts by weight (about 9 wt% to about 13 wt%).

### Example 3

The relationship between the content of the rice powder in the improving agent and the condition of the cooked rice was investigated. As shown in Table 4, 9 kinds of the improving agents were prepared by altering the content of the rice powder in the rice powder-water mixture from 1.5 to 5.5 wt%, respectively, in test groups referred to as Test Groups 11 to 19. In the same manner as in Example 1, the frozen cooked rices (B) were produced by adding 13 parts by weight of the improving agent of each test group to 100 parts by weight of the frozen cooked rice (A) produced in Example 1.

**Table 4**

| Test Group | 11 | 12 | 13 | 14 | 15 | 16 | 17 | 18 | 19 |
|---|---|---|---|---|---|---|---|---|---|
| Rice Powder | 1.5 | 2 | 2.5 | 3 | 3.5 | 4 | 4.5 | 5 | 5.5 |
| Water | 98.5 | 98 | 97.5 | 97 | 96.5 | 96 | 95.5 | 95 | 94.5 |

The condition of each cooked rice after microwave heating was evaluated in the same manner as in Example 1. The results are shown in Table 5.

**Table 5**

| Test Group | Appearance | Smell | Mouthfeel | | Taste | Total Evaluation |
|---|---|---|---|---|---|---|
| | | | Surface | Inside | | |
| 11 | 4 | 4 | 3.5 | 3.5 | 3.5 | 3.5 |
| 12 | 4.5 | 4.5 | 4 | 4 | 4 | 3.8 |
| 13 | 4.5 | 4.5 | 4.5 | 4.5 | 4.5 | 4.5 |
| 14 | 4.5 | 4.5 | 5 | 4.5 | 5 | 4.8 |
| 15 | 4.5 | 4.5 | 4.5 | 4.5 | 4.5 | 4.4 |
| 16 | 4.5 | 4 | 4 | 4 | 4 | 3.7 |
| 17 | 4.5 | 4 | 4 | 4 | 4 | 3.5 |
| 18 | 4.5 | 4 | 3.5 | 4 | 3.5 | 3.5 |
| 19 | 4.5 | 4 | 3 | 3.5 | 2.5 | 3 |

These results indicate that the content of the rice powder when the improving agent is prepared is preferably from 1.5 to 5 wt%, more preferably from 2.5 to 3.5 wt%.

### Example 4

The relationship between the viscosity of the improving agent and the condition of the frozen cooked rice was investigated by selecting the heating condition of a rice powder-water mixture containing 3 wt% rice powder thereby altering the viscosity of the improving agent. Various frozen cooked rices (B) were produced by adding 13 parts by weight of each improving agent with various viscosity to the frozen cooked rice (A). The evaluation of the cooked rices after microwave heating having various viscosities, and heating conditions of the rice powder-water mixture are shown in Table 6. Operations of rice cooking and the like were carried out in the same manner as in Example 1 (which provision is also applied hereinafter). In this example, viscosities were measured using Type B viscometer LVDV-I+ produced by Brookfield under the condition of keeping each improving agent at 78°C.

**Table 6**

| Viscosity | Appearance | smell | Mouthfeel | Taste | Total Evaluation | Heating Condition |
|---|---|---|---|---|---|---|
| 10 | 4 | 5 | 5 | 5 | 5 | After reaching 90°C, kept at 90°C for 10 min, cooled to 70°C over 10 min |
| 13 | 4 | 5 | 5 | 5 | 5 | After reaching 90°C, kept at 90°C for 10 min, cooled to 78°C over 10 min and kept for 5 min |
| 15 | 4 | 5 | 5 | 5 | 5 | After reaching 90°C, kept at 90°C for 10 min, cooled to 78°C over 10 min and kept for 10 min |
| 20 | 4 | 4.5 | 4.5 | 4.5 | 4.5 | After reaching 90°C, kept at 90°C for 10 min, cooled to 78°C over 10 min and kept for 15 min |
| 25 | 4 | 4 | 4.5 | 4.5 | 4.5 | After reaching 90°C, kept at 90°C for 10 min, cooled to 78°C over 10 min and kept for 20 min |
| 38 | 4 | 4 | 4.5 | 4 | 4 | After reaching 90°C, kept at 90°C for 10 min, cooled to 78°C over 10 min and kept for 35 min |
| 55 | 4 | 4 | 4.5 | 4 | 4 | After reaching 90°C, kept at 90°C for 10 min, cooled to 78°C over 10 min and kept for 50 min |
| 62 | 4 | 4 | 4 | 4 | 4 | After reaching 90°C, kept at 90°C for 10 min, cooled to 78°C over 10 min and kept for 60 min |
| 71 | 4 | 3 | 3.5 | 3.5 | 3.5 | After reaching 90°C, kept at 90°C for 10 min, cooled to 78°C over 10 min and kept for 65 min |
| 86 | 4 | 3 | 3.5 | 3 | 3.5 | After reaching 90°C, kept at 90°C for 10 min, cooled to 78°C over 10 min and kept for 73 min |
| 94 | 4 | 3 | 3.5 | 3 | 3.5 | After reaching 90°C, kept at 90°C for 10 min, cooled to 78°C over 10 min and kept for 80 min |
| 129 | 4 | 3 | 3 | 3 | 3 | After reaching 90°C, kept at 90°C for 10 min, cooled to 78°C over 10 min and kept for 110 min |
| 155 | 4 | 3 | 3 | 3 | 3 | After reaching 90°C, kept at 90°C for 15 min, cooled to 78°C over 10 min and kept for 80 min |
| 205 | 4 | 2.5 | 3 | 2.5 | 2.5 | After reaching 90°C, kept at 90°C for 10 min, cooled to 78°C over 10 min and kept for 144 min |

These results indicate that the improving agent having lower viscosity is better; specifically, in case where the content of rice powder is 3 wt%, viscosity of not more than 100 cP, particularly not more than 60 cP is preferred.

On the other hand, the rice power-water mixture containing 3 wt% rice powder was heated at 90°C for 10 minutes, and thereafter cooled quickly to 80°C and kept the mixture at 80°C. The change of the viscosity of the mixture during the mixture was kept at 80°C under stirring at shear rate 10 (1/s) is shown in Fig. 4. Viscotester VT550 viscometer (PK100 cone-plate system) produced by HAAKE was used as a measuring apparatus.

As shown in Fig. 4, the viscosity began to increase at 20 minutes from the start of keeping the rice powder-water mixture at 80oC, reached to the maximum value of about 250 cP at about 70 minutes, and began to decrease gradually at 100 minutes.

### Example 5

The relationship between the degree of gelatinization of the improving agent and the condition of the cooked rice was investigated by selecting the heating condition of the rice powder-water mixture containing 3 wt% rice powder thereby altering the degree of gelatinization of the improving agent. The heating condition for achieving various degrees of gelatinization, the degree of gelatinization and the evaluation of the cooked rice are shown in Table 7.

**[Table 7]**

| Heating Condition | Degree of Gelatinization (mean of 2 tests) | Total Evaluation of Taste |
|---|---|---|
| Immediately after Reaching 60°C | 24% | 1 |
| Immediately after Reaching 70°C | 82.65% | 2 |
| Immediately after Reaching 80°C | 85% | 3.5 |
| Immediately after Reaching 90°C | 89.10% | 4 |
| Keeping 5 min after Reaching 90°C | 91.60% | 5 |

From these results, it is considered that the degree of gelatinization should be adjusted to not less than 85%, and preferably not less than 90%.

### Example 6

The influence of the type of rices as raw materials for rice powder and the mesh size of rice powder on the efficiency of the improving agent was investigated. The rice powder was classified into 5 degrees: that is, 42 mesh ON (Group A), 42 to 100 mesh (Group B), 100 to 200 mesh (Group C), 200 to 300 mesh (Group D), and 300 mesh PASS (Group E) . The rice powder of Group A was not used because the particle size thereof was too large. Each rice powder was mixed with water to a rice powder content of 5.7 wt%, respectively, and the resulting mixtures were heated to 90°C, followed by keeping them at 80°C. Each obtained mixture kept at 80°C was measured for the maximum viscosity, minimum viscosity, breakdown, final viscosity and the consistency using Rapid Visco Analyzer (produced by Newport Scientific, 3Dplus). The results are shown in Table 8.

**Table 8**

| Rice Powder Used | | Maximum Viscosity | Minimum Viscosity | Breakdown | Final Viscosity | Consistency |
|---|---|---|---|---|---|---|
| Koshihikari, produced in Kurokawa-village, Niigata, Nonstandard | Whole Powder | 297 | 228 | 69 | 634 | 406 |
| | Group B | 208 | 195 | 13 | 491 | 296 |
| | Group C | 334 | 260 | 74 | 689 | 429 |
| | Group D | 305 | 235 | 70 | 637 | 402 |
| | Group E | 301 | 222 | 79 | 597 | 375 |
| Koshihikari, produced in Uonuma, Niigata, First grade | Whole Powder | 311 | 242 | 69 | 601 | 359 |
| | Group B | 229 | 214 | 15 | 510 | 296 |
| | Group C | 309 | 239 | 70 | 598 | 359 |
| | Group D | 326 | 251 | 75 | 627 | 376 |
| | Group E | 323 | 232 | 91 | 613 | 381 |
| Koshihikari, produced in Kurokawa-village, Niigata, First grade | Whole Powder | 313 | 229 | 84 | 592 | 363 |
| | Group B | 235 | 217 | 18 | 540 | 323 |
| | Group C | 334 | 245 | 89 | 634 | 389 |
| | Group D | 353 | 264 | 89 | 678 | 414 |
| | Group E | 328 | 229 | 99 | 599 | 370 |
| Kirara, produced in Hokkaido, First grade | Whole Powder | 255 | 189 | 66 | 504 | 315 |
| | Group B | 191 | 174 | 17 | 472 | 298 |
| | Group C | 299 | 227 | 72 | 602 | 375 |
| | Group D | 269 | 188 | 81 | 520 | 332 |
| | Group E | 284 | 198 | 86 | 535 | 337 |
| Akitakomachi, produced in Akita, First grade | Whole Powder | 313 | 224 | 89 | 586 | 362 |
| | Group B | 233 | 207 | 26 | 527 | 320 |
| | Group C | 325 | 245 | 80 | 622 | 377 |
| | Group D | 343 | 240 | 103 | 634 | 394 |
| | Group E | 340 | 243 | 97 | 613 | 370 |

Further, 13 parts by weight of each improving agent kept at 90°C for 10 minutes was added to 100 parts by weight of the above-described frozen cooked rice (A), respectively, and the resulting rices were refrozen to obtain the frozen cooked rices (B). These frozen cooked rices were heated and then evaluated in the same manner as described above. As a result, the group having higher maximum viscosity was evaluated higher. In addition, in cases where any types of rices were used as raw materials, Groups C and D were highly evaluated compared to Groups B and E, indicating that the preferred size of the rice powder is 100 to 300 mesh.

## Claims

1. An improving agent for cooked rice **characterized in that** said agent is prepared by pulverizing a nonglutinous rice to obtain a rice powder, not less than 50 wt% of said rice powder based on the rice powder retaining cellular structure of each cell of the nonglutinous rice; mixing the obtained rice powder with water to a rice powder content of 1 to 10 wt% in water; and heating the obtained mixture such that a degree of gelatinization thereof becomes not less than 85%.

2. The improving agent for cooked rice according to claim 1, **characterized in that** at least 40 wt% of said rice powder has a mesh size of between 100 and 300 mesh.

3. The improving agent for cooked rice according to claim 1 or 2, **characterized by** having a viscosity of not more than 1/3 of the maximum value of the viscosity which is observed when the mixture of water and said rice powder is heated continuously and a viscosity of said mixture is measured with time.

4. The improving agent for cooked rice according to any one of claims 1 to 3, **characterized in that** not less than 50% of rice starch granules contained in said improving agent retains structure of each starch granule and exists in the form in which a plurality of the granules are connected to each other.

5. A cooked rice food product **characterized in that** said improving agent according to any one of claims 1 to 4 is added thereto in an amount of at least 2 wt% based on the cooked rice, and at least a part of the surface of the cooked rice is covered with said improving agent.

6. The cooked rice food product according to claim 5, **characterized in that** said cooked rice is a frozen food, chilled food, retort pouch food or aseptically packaged cooked rice.

7. The cooked rice food product according to claim 5, **characterized in that** said cooked rice is a plain white rice, unpolished rice, cooked rice with cereal grains (kokumotsu-han), rice cooked with ingredients (takikomi-gohan), cooked rice mixed with ingredients (maze-gohan), rice gruel, rice flavored with tea and/or seasonings (cha-meshi), sushi, or rice ball.
